Europäisches Patentamt

European Patent Office

Office européen des brevets

(11) Veröffentlichungsnummer: **0 239 571 B1**

# EUROPÄISCHE PATENTSCHRIFT
## veröffentlicht nach Art. 158 Abs. 3 EPÜ

(45) Veröffentlichungstag der Patentschrift: **10.04.91**

(51) Int. Cl.⁵: **B21D 49/00**

(21) Anmeldenummer: **85905052.8**

(22) Anmeldetag: **04.10.85**

(86) Internationale Anmeldenummer:
**PCT/DE85/00364**

(87) Internationale Veröffentlichungsnummer:
**WO 87/01978 (09.04.87 87/08)**

(54) **MEHRSCHICHTIGER HOHLKÖRPER, VERFAHREN ZU SEINER HERSTELLUNG UND SEINE VERWENDUNG.**

(43) Veröffentlichungstag der Anmeldung:
**07.10.87 Patentblatt 87/41**

(45) Bekanntmachung des Hinweises auf die Patenterteilung:
**10.04.91 Patentblatt 91/15**

(84) Benannte Vertragsstaaten:
**CH DE FR GB IT LI SE**

(56) Entgegenhaltungen:
DE-A- 2 227 955    DE-A- 2 624 798
DE-A- 3 133 209    DE-A- 3 151 487
DE-C- 548 576      DE-C- 864 173
US-A- 1 406 693    US-A- 2 263 714

IBM Technical Disclosure Bulletin, Band 13, Nr. 3, August 1970, Armonk, New York, (US) G.G.Chase et al.: "Making a laminated metalinsulation-metal tube", siehe Seiten 685 und 686.

(73) Patentinhaber: **GESENKSCHMIEDE SCHNEI-DER GMBH**
**Ulmer Strasse 112**
**W-7080 Aalen(DE)**

(72) Erfinder: **EBBINGHAUS, Alfred**
**Schellingstr. 78**
**W-7080 Aalen(DE)**
Erfinder: **BÖGEL, Helmut**
**Gabelsbergerstr. 10**
**W-7080 Aalen(DE)**

(74) Vertreter: **Neidl-Stippler, Cornelia, Dr.**
**Rauchstrasse 2**
**W-8000 München 80(DE)**

## Beschreibung

Die Erfindung betrifft einen mehrschichtigen Hohlkörper mit unterschiedlichen Querschnitten, der eine Außen-, eine Innen- und eine Zwischenschicht aufweist, wobei Außen- und/oder Innenschicht aus metallischem Werkstoff bestehen und die Zwischenschicht ein wärme- und/oder schwingungsisolierendes Material ist, ein Verfahren zu seiner Herstellung sowie seine Verwendung.

Mehrschichtige Hohlkörper sind für unterschiedliche Einsatzzwecke bereits bekannt geworden.

Aus der US-A- 22 63 714 sind mehrschichtige rohrförmige Gegenstände bekannt geworden, wobei keine Querschnittsänderung des mehrschichtigen Gegenstandes über seine Länge erfolgt. Insbesondere betrifft die US-A- 22 63 714 ein Verfahren zur Herstellung zweischichtiger Rohre, bei dem bevorzugt eine stärkere Schicht aus einem preiswerten Material und eine dünne aus teurem Material aufeinanderliegen, wobei durch Innendruck ein leicht umformbares Innenrohrmaterial an ein Außenrohr angelegt wird und gleichzeitig mit der Aufweitung des Innenrohres auch eine Aufweitung des Außenrohres erfolgen kann.

Andere zweischichtige rohrförmige Körper mit relativ dünnen Wänden werden nach der Lehre dieser Druckschrift nicht hergestellt.

Im "IBM Technical Disclosure Bulletin", Band 13, Nr. 3, August 1970, ist die Herstellung von dünnwandigen Rohren beschrieben, die zwischen zwei gut leitenden Metallschichten, beispielsweise aus Silber, Kupfer, Aluminium, eine elektrisch isolierende Schicht aufweisen. Die Innenschicht wird dabei durch Druck an das Außenrohr angelegt, während die Außenwand konstant bleibt oder aber es wird das gesamte Rohr in seinem Durchmesser durch Ziehen durch eine Form verkleinert. Die Ausführung anderer Formen als Rohre ist dort nicht angegeben. Keinesfall ist hier eine schwingungsisolierende Schicht angegeben, sondern nur die Verwendung einer Glasfasermatte als elektrische Isolationsschicht.

In der DE-A- 33 32 209 wird eine mehrschichtige Wand eines hohlen Körpers und ein Verfahren zu dessen Herstellung beschrieben, die thermisch und mechanisch hoch belastbar und gut wärmeisoliert ist. Sie eignet sich insbesondere für Zylinderlaufbuchsen. Bei dem bekannten Hohlkörper wird eine wärme- und/oder verschleißfeste keramische Innenschicht von einer gegebenenfalls faserverstärkten Werkstoffhalteschicht umgeben, die beispielsweise durch Aufschrumpfen auf den Keramikkörper oder Aufsintern von sinterfähigem Metallpulver hergestellt wird. Die Halteschicht kann auch aus Metall sein und durch Umgießen der Laufbuchse mit den Metallen in einer Gußform hergestellt werden.

Ein weiterer mehrschichtiger Hohlkörper ist aus der DE-C-864 173 bekannt geworden, die eine in einen Zylinderkopf eingegossene Brennkammer sowie ein Verfahren zu deren Herstellung beschreibt. Dabei wird eine in den Zylinderkopf eingegossene Brennkammer gegen den sie umgebenden Teil des Zylinderkopfes wärmeisoliert, indem die Brennkammer gegen die sie umgebenden metallischen Teile des Zylinderkopfes beispielsweise durch Graphit oder keramische Stoffe als Zwischenschicht, die gegebenenfalls mit einem Bindemittel vermischt aufgebracht werden können, getrennt und thermisch isoliert ist.

Die Hohlkörper nach dem Stand der Technik sind insofern nachteilig, als sie zu ihrer Herstellung komplizierte Verfahren benötigen, beispielsweise muß Innen- und Außenschicht durch aufwendige Klebe- oder auch mechanische Befestigungselemente, wie Schrauben, Nieten o. ä., miteinander verbunden werden. Aus diesem Grunde wurden sie bisher nur für sehr teuere und/oder sehr kleine Teile eingesetzt.

Mehrschichtige Rohre sind zwar bekannt, allerdings war es bisher nicht möglich, Hohlkörper mit unterschiedlichen Querschnitten herzustellen, wie sie für die verschiedensten Verwendungsformen, beispielweise für Kugelgehäuse oder dergleichen, erwünscht sind.

Allgemein können mehrschichtige Hohlkörper mit verschiedenen Querschnitten bei verschiedensten Einsatzstellen nutzbringend verwendet werden, beispielsweise werden in chemischen Anlagen für hochaggressive Stoffe Rohre und Rohrverbindungen benötigt, deren Innenwände gegen bestimmte Chemikalien resistent sind, während an die Außenwand andere Anforderungen gestellt werden, wie hohe Druckfestigkeit, Stabilität u.ä.

Der Erfindung liegt die Aufgabe zugrunde, mehrschichtige Hohlkörper mit verschiedenen Querschnitten zu erstellen, die sowohl vom Material als auch von der Herstellung her kostengünstig erhältlich sind.

Die Aufgabe wird erfindungsgemäß durch einen mehrschichtigen Hohlkörper mit unterschiedlichen Querschnitten, der eine Außen-, eine Innen- und eine Zwischenschicht aufweist, gelöst, wobei die Außen- und/oder Innenschicht aus metallischem Werkstoff bestehen und die Zwischenschicht ein wärme- und/oder schwingungsisolierendes Material ist, wobei alle Schichten zumindest in einem Teilbereich des Hohlkörpers gemeinsam umgeformt sind.

Vorteilhafte Weiterbildungen bestehen darin, daß Außen- und Innenschicht aus unterschiedlichen Metallen, Metalllegierungen oder faserverstärken Metallen und/oder Metalllegierungen bestehen; derartige Hohlkörper eignen sich besonders gut für den Transport aggressiver Fluide, beispielsweise wenn als Innenwand säurefeste Stoffe oder aber Metalle verwendet werden, die bei Kontakt mit der zu transportierenden Flüssigkeit einer eine Schutzschicht hervorbringenden Reaktion unterliegen, wie es beispielsweise bei Aluminium und bestimmten Aluminiumlegierungen der Fall ist. Eine weitere vorteilhafte Anwendung der erfindungsgemäßen Hohlkörper kann im Transport/Aufbewahrung von radioaktivem strahlenden Material liegen, da Stoffe mit einem hohen Abschirmungsgrad als eine Schicht eingesetzt werden können, während die mechanischen/thermischen Eigenschaften des Körpers durch seine andere(n) Schicht(en) bestimmbar sind.

Bei einer besonders vorteilhaften Weiterbildung des Erfindungsgedankens ist zwischen einer Außen- und Innenschicht eine Zwischenschicht vorgesehen, welche eine weitere Barriere für Schwingungsübergänge von Außen nach Innen oder auch für Temperaturdurchgänge bildet.

Dabei kann es vorteilhaft sein, wenn die Zwischenschicht aus einem wärmeisolierenden Material hergestellt ist, beispielsweise aus einer Keramikfasermatte.

Die Innen- und Außenschicht des Hohlköprers kann Stahl, auch korrosionsfester Stahl sein. Bei einer anderen bevorzugten Ausführungsform kann die Innen- und/oder Außen schicht - je nach Einsatz - ein hitzebeständiger Stahl sein.

Für bestimmte bevorzugte Einsatzformen kann Innen- oder Außenschicht aus einem Leichtmetall bestehen, dieses eignet sich besonders dann, wenn leichtgewichtige Teile oder aber auch schwingungsgedämpfte Teile hergestellt werden sollen. In anderen bevorzugten Fällen kann die Verwendung von Schwermetall als Innen- oder Außenschicht angezeigt sein.

Eine weitere bevorzugte Ausführungsform des erfindungsgemäßen Hohlkörpers verwendet als Innenschicht Materialien, die einen hohen Einfangquerschnitt für Strahlung, und oder auch Elementarteilchen, wie sie bei radioaktiven Zerfällen auftreten, besitzt. Derartige Hohlkörper eignen sich dann besonders zum Transport von radioaktiven Flüssigkeiten (Innenauskleidung mit Bleilegierungen u.ä.).

Bei einer weiteren bevorzugten Ausführungsform kann Innen- und/oder Außenschicht aus einem nicht metallischen Werkstoff bestehen, der gemeinsam mit den anderen Werkstoffschichten umformbar ist.

Vorteilhafterweise kann ein zwischen Außen- und Innenschicht eingebetteter Werkstoff ein Elastikum sein, um als mechanisches Dämpfungsglied zu wirken.

Kurze Beschreibung der Zeichnung Nachfolgend wird die Erfindung anhand von einem Ausführungsbeispiel und der Zeichnung näher erläutert.

Dabei zeigt:

Fig. 1    einen Schnitt durch ein erstes Hohlteil, nämlich ein Kreuzstück, das lediglich zur Erläuterung des Hintergrunds der Erfindung dargestellt wird,

Fig. 2    eine zum Teil geschnittene Draufsicht bei II-II in Figur 1;

Fig. 3    Seitenansicht und Draufsicht eines Schnittes bei III-III der Fig. 1;

Fig. 4    einen Schnitt durch ein zweites Hohlteil nach einem Ausführungsbeispiel der Erfindung, nämlich ein Kugelgehäuse aus Verbundmetall mit innenliegender Isolationsschicht;

Fig. 5    eine Seitenansicht des Kugelgehäuses gemäß Fig. 4 und

Fig. 6    einen Querschnitt bei VI-VI in Fig. 5

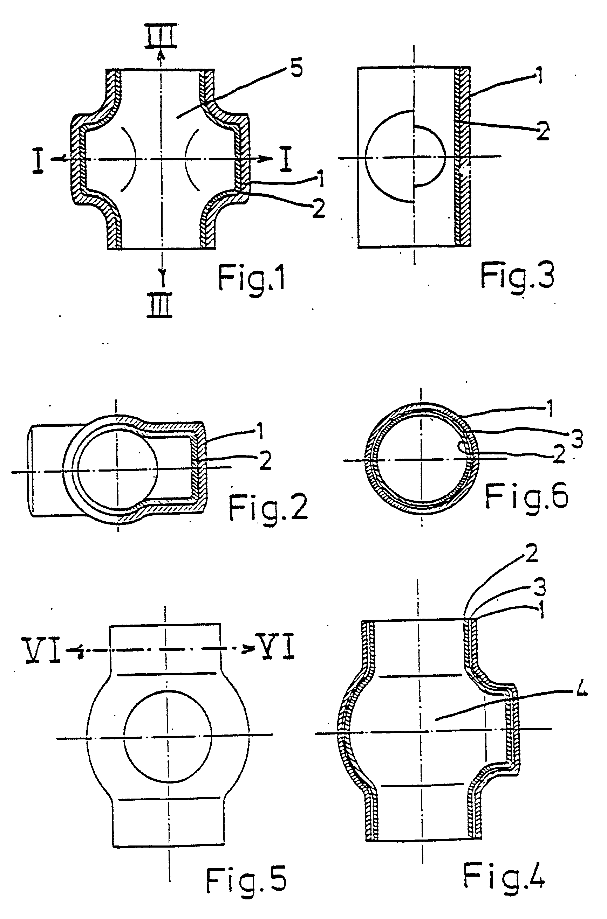

In den Fig. 1 bis 3 ist ein Kreuzstück 5 dargestellt, das eine Innenschicht 2 und Außenschicht 1 aufweist.

In den Fig. 4 bis 6 ist ein Kugelgehäuse 4 gezeigt, welches eine äußere Hohlteilwand 1 eine innere Hohlteilwand 2 und eine Zwischenschicht 3 zwischen innerer und äußerer Hohlteilwand aufweist.

Die Werkstücke wurden durch gemeinsames Umformen von Außen- und Innenschicht sowie eine Zwischenschichtmaterial hergestellt, wobei das Innenteil während des Umformens innen durch unter hohem Druck stehendes Elastikum, bspw. eine Flüssigkeit, abgestützt wird, um eine Faltenbildung von innen bzw. eine Auflösung des verformten Verbundes während des Umformens zu vermeiden, so daß das Anhaften der Materialschichten aneinander sichergestellt ist.

Bei einer bevorzugten Ausführungsform des erfindungsgemäßen Werkstücks besteht die Innenwand aus Stahl, die Außenwand aus Stahl und eine Zwischenschicht aus Keramikmaterial, Kunstoff und/oder Glas.

## Ansprüche

1. Mehrschichtiger Hohlkörper mit unterschiedlichen Querschnitten, der eine Außen(1)-, eine Innen(2)- und eine Zwischenschicht (3) aufweist, wobei Außen(1)- und/oder Innenschicht (2) aus metallischem Werkstoff bestehen und die Zwischenschicht (3) ein wärme- und/oder schwingungsisolierendes Material ist und alle Schichten (1 bis 3) zumindest in einem Teilbereich des Hohlkörpers gemeinsam umgeformt sind.

2. Hohlkörper gemäß Anspruch 1, dadurch gekennzeichnet, daß Außen- (1) und Innenschicht (2) im wesentlichen aus gleichen oder unterschiedlichen Metallen, Metalllegierungen und/oder faserverstärkten Materialien oder Legierungen bestehen.

3. Hohlkörper gemäß einem der vorangehenden Ansprüche, dadurch gekennzeichnet, daß die Zwischenschicht (3) Keramik, beispielsweise eine Keramikfasermatte oder Keramikpapier aufweist.

4. Hohlkörper gemäß einem der vorangehenden Ansprüche, dadurch gekennzeichnet, daß die Innen- (2) und/oder Außenschicht (1) im wesentlichen aus Stahl besteht.

5. Hohlkörper gemäß Anspruch 4, dadurch gekennzeichnet, daß der Stahl ein hitzebeständiger Stahl ist.

6. Hohlkörper nach einem der vorangehenden Ansprüche, dadurch gekennzeichnet, daß Außen- (1) und/oder Innenschicht (2) ein Leichtmetall ist.

7. Hohlkörper gemäß einem der Ansprüche 1 bis 5, dadurch gekennzeichnet, daß die Innen- (2) und/oder Außen schicht (1) ein Schwermetall ist.

8. Hohlkörper gemäß einem der vorangehenden Ansprüche wobei nur eine der Außen- und Innenschichten aus metallischem Werkstoff ist, dadurch gekennzeichnet, daß die andere der Innen- (2) und Außenschichten (1) ein Nichtmetall ist.

9. Hohlkörper gemäß einem der vorangehenden Ansprüche, dadurch gekennzeichnet, daß mindestens eine der Materialschichten einen hohen Einfangquerschnitt für radioaktive, kurzwellige Strahlung oder Elementarteilchen besitzt.

10. Verfahren zum Umformen eines mehrschichtigen hohlen Körpers, wobei die Schichten gemeinsam umgeformt werden, dadurch gekennzeichnet, daß das Umformen durch Stauchen durchgeführt wird, während der Hohlkörper innen durch ein elastisches Medium abgestützt wird.

11. Verfahren nach Anspruch 10, dadurch gekennzeichnet, daß zur Innenabstützung des Hohlkörpers während der Umformung als Abstützung ein elastisches Medium, beispielsweise ein Fluid, unter hohem Druck eingesetzt wird.

12. Verwendung des Hohlkörpers gemäß einem der Ansprüche 1 bis 9 als schwingungsgedämpftes und/oder temperaturisolierendes Element.

13. Verwendung des Hohlkörpers gemäß einem der Ansprüche 1 bis 9 als Welle.

**Claims**

1. Multi-layer hollow body of differing cross-sections, with an outer (1) an inner (2) and an intermediate layer (3), in which respect the outer (1) and/or the inner layer (2) are of metallic material and the intermediate layer (3) is a heat- and/or vibration-insulating material and all layers (1 to 3) are mutually deformed at least in partial regions.

2. Hollow body according to claim 1, characterised in that outer (1) and inner (2) layer are composed substantially of identical or different metals, metal alloys and/or fibre-reinforced materials or alloys.

3. Hollow body according to one of the above claims, characterised in that the intermediate layer (3) includes ceramics, for example a ceramic fibre mat or ceramic paper.

4. Hollow body according to one of the above claims, characterised in that the inner (2) and/or outer (1) layer is substantially of steel.

5. Hollow body according to claim 4, characterised in that the steel is a refractory steel.

6. Hollow body according to one of the above claims, characterised in that the outer (1) and/or the inner layer (2) is of a light alloy.

7. Hollow body according to one of claims 1 to 5, characterised in that the inner (2) and/or outer layer (1) is of a heavy metal.

8. Hollow body according to one of the above claims, with only one of the outer and inner layers made of metallic material, characterised in that the other inner (2) or outer layers 1) are non metallic.

9. Hollow body according to one of the above claims, characterised in that at least one of the material layers has a high capture cross-section for radioactive shortwave radiation or elementary particles.

10. Process of deforming a multi-layer hollow body, in which respect the layers are mutually deformed, characterised in that the deforming is achieved by way of compression whilst the hollow body is internally supported by an elastic medium.

11. Process according to claim 10, charcterised in that an elastic medium, for example a fluid, is entered at high pressure for the purpose of giving inside support to the hollow body during the deformation.

12. Application of the hollow body according to one of claims 1 to 9 as vibration-damping and/or temperature-insulating element.

13. Application of the hollow body according to one of claims 1 to 9 as a shaft.

## Revendications

1. Corps creux à plusieurs couches avec différentes sections, présentant une couche extérieure (1), une couche intérieure (2) et une couche intermédiaire (3), tandis que la couche extérieure (1) et/ou la couche intérieure (2) sont réalisées en matériau métallique et que la couche intermédiaire (3) est un matériau isolant de la chaleur et/ou des vibrations et que toutes les couches (1 à 3) sont mises en forme simultanément dans au moins une zone partielle du corps creux.

2. Corps creux selon la revendication 1, caractérisé en ce que la couche extérieure (1) et la couche intérieure (2) sont constituées essentiellement de métaux, d'alliages métalliques et/ou de matériaux renforcés par des fibres ou d'alliages identiques ou différents.

3. Corps creux selon l'une des revendications précédentes, caractérisé en ce que la couche intermédiaire (3) est constituée de céramique et, par exemple, d'une nappe de fibres céramiques ou de papier céramique.

4. Corps creux selon l'une des revendications précédentes, caractérisé en ce que la couche intérieure (2) et/ou la couche extérieure (1) sont réalisées essentiellement en acier.

5. Corps creux selon la revendication 4, caractérisé en ce que l'acier est un acier réfractaire.

6. Corps creux selon l'une des revendications précédentes, caractérisé en ce que la couche extérieure (1) et/ou la couche intérieure (2) sont constituées d'un métal léger.

7. Corps creux selon l'une des revendications 1 à 5, caractérisé en ce que la couche intérieure (2) et/ou la couche extérieure (1) sont constituées d'un métal lourd.

8. Corps creux selon l'une des revendications précédentes dans lequel seule l'une des couches extérieure ou intérieure est réalisée en matériau métallique, caractérisé en ce que l'autre couche, soit intérieure (2), soit extérieure (1), est un matériau non métallique.

9. Corps creux selon l'une des revendications précédentes, caractérisé en ce qu'au moins l'une des couches de matériau possède une section de capture importante pour le rayonnement radioactif à ondes courtes ou pour les particules élémentaires.

10. Procédé pour mettre en forme un corps creux à plusieurs couches dans lequel les couches sont mises en forme simultanément, caractérisé en ce que la mise en forme est réalisée par estampage alors que le corps creux est soutenu intérieurement par un fluide élastique.

11. Procédé selon la revendication 10, caractérisé en oe que, pour soutenir intérieurement le corps creux pendant la mise en forme, on utilise comme support un fluide élastique, par exemple un liquide sous haute pression.

12. Utilisation du corps creux selon l'une des revendications 1 à 9, comme élément avec amortissement des vibrations et/ou isolant thermique.

13. Utilisation du corps creux comme arbre, selon l'une des revendications 1 à 9.

Fig.1

Fig.3

Fig.2

Fig.6

Fig.5

Fig.4